# EUROPÄISCHE PATENTSCHRIFT

(11) **EP 3 152 104 B1**
(45) Veröffentlichungstag und Bekanntmachung des Hinweises auf die Patenterteilung: **13.06.2018**
(21) Anmeldenummer: 15716762.8
(22) Anmeldetag: 09.04.2015
(51) Int. Cl.: B62L 3/08, B60T 8/17, B60T 8/26, B60T 8/32

(54) **VERFAHREN ZUR VERTEILUNG EINER BREMSKRAFT UND BREMSEINRICHTUNG**
METHOD FOR DISTRIBUTING A BRAKING POWER, AND BRAKING DEVICE
PROCÉDÉ DE RÉPARTITION D'UNE FORCE DE FREINAGE ET MOYEN DE FREINAGE

(30) Priorität: 03.06.2014 DE 102014210382
(43) Veröffentlichungstag der Anmeldung: 12.04.2017
(73) Patentinhaber: Robert Bosch GmbH, 70442 Stuttgart (DE)
(72) Erfinder: DACKERMANN, Tim, 72074 Tuebingen (DE); GREINER, Rinaldo, 72762 Reutlingen (DE)
(86) Internationale Anmeldenummer: PCT/EP2015/057705
(87) Internationale Veröffentlichungsnummer: WO 2015/185248

(56) Entgegenhaltungen:
- EP-A1- 2 311 700
- DE-A1- 10 011 375
- DE-A1- 10 307 339
- US-A- 4 494 800

## Beschreibung

Die vorliegende Erfindung betrifft ein Verfahren zum Bremsen eines motorisch oder mit Muskelkraft betreibbaren Fahrzeuges, insbesondere eines Elektrofahrrads. Ein solches Fahrzeug weist eine hydraulische Vorderradbremse und eine hydraulische Hinterradbremse auf, die jeweils von einem Fahrer separat betätigbar sind. Der dabei bewirkte Bremsdruck an der Vorderradbremse bzw. der Hinterradbremse kann mittels einer elektrohydraulischen Bremskraftbeeinflussungseinrichtung verändert werden, indem diese von einer elektrischen Bremsdrucksteuereinrichtung angesteuert wird. Auf diese Weise kann der Bremsdruck an der Vorderradbremse und/oder Hinterradbremse erhöht und/oder verringert werden, und damit auch die Bremskraft.

In einem weiteren Aspekt betrifft die Erfindung eine elektrohydraulische Bremseinrichtung mit einer hydraulischen Vorderradbremse und einer hydraulischen Hinterradbremse sowie je einer separaten Bremsbetätigungseinrichtung für diese beiden Bremsen. Die Bremseinrichtung umfasst weiter eine elektrohydraulische Bremsbeeinflussungseinrichtung zur Erhöhung und/oder Verringerung eines Bremsdrucks der Vorderradbremse und/oder eines Bremsdrucks der Hinterradbremse und somit zur Erhöhung bzw. Verringerung von deren Bremskraft. Weiter umfasst die Bremseinrichtung eine elektrische Bremsdrucksteuereinrichtung, mittels der die Bremskraftbeeinflussungseinrichtung ansteuerbar ist.

### Stand der Technik

Die Schriften DE 103 07 339 A1 und EP 2 311 700 A1 beschreiben jeweils ein Bremssystem für ein Motorrad.

Im Stand der Technik sind Antiblockiersysteme (ABS-Systeme) für zwei- und mehrrädrige Fahrzeuge bekannt. Diese ABS-Systeme verfügen über Radsensoren, mit denen die Bewegung eines Rades erfasst werden kann. Anhand dieser Messungen kann das ABS-System feststellen, ob ein Rad beim Bremsen blockiert oder nicht, und auf diese Weise den Bremsvorgang so regeln, dass sich der Reibungszustand zwischen Reifen und Untergrund an der Grenze zwischen Rollreibung und Gleitreibung bewegt. Diese Regelung wird typischerweise für jedes Rad einzeln durchgeführt. Dazu wird mittels einer Bremsdrucksteuereinrichtung der Bremsdruck zu den einzelnen Radbremsen angepasst.

Ein ABS-System, vorzugsweise für ein Fahrrad ist beispielsweise aus der DE10158382A1 bekannt.

Die DE102010049474A1 betrifft ein hydraulisches Bremssystem mit Antiblockierfunktion, vorzugsweise für Motorräder, Kleinkrafträder und Fahrzeuge ohne eigenen Antrieb. Hierbei ist ein Hydrauliksystem mit Hydraulikpumpe vorgesehen, das die Antiblockierfunktion über einen hydraulischen Kreislauf realisiert.

Die DE102010038525A1 offenbart eine Bremsvorrichtung mit aktiver Bremskraftbegrenzung sowie ein Zweirad mit einer solchen Bremsvorrichtung. Dabei wird ein Piezostack in die hydraulische Leitung der Bremsvorrichtung integriert. Durch Aktivierung des Piezostacks kann sich dieser ausdehnen bzw. zusammenziehen, wodurch das Volumen in der Leitung der Bremsvorrichtung erhöht bzw. verringert wird. Auf diese Weise kann das bekannte ABS-Verhalten eines PKW beispielsweise bei einem Fahrrad realisiert werden.

Weiter ist ein Bremssystem für Motorräder bekannt, bei dem eine erste von zwei Bremsbetätigungseinrichtungen sowohl auf das Vorderrad als auch auf das Hinterrad wirkt. Die zweite Bremseinrichtung wirkt nur auf das Vorderrad. Die erste Bremseinrichtung ist dabei so ausgelegt, dass bei ihrer Betätigung ein für einen typischen Normalfall geeigneter Bremsdruck zu der Vorderradbremse bzw. der Hinterradbremse geleitet wird. Die zweite Bremseinrichtung für das Vorderrad ist als Zusatzbremse für Notfälle oder besondere Fahrsituationen wie etwa eine Fahrt mit Sozius oder eine steile Talfahrt gedacht, bei denen eine erhöhte Bremskraft an dem Vorderrad erforderlich ist. Dieses System wurde von dem italienischen Motorradhersteller Moto Guzzi in den 1970er Jahren entwickelt. Dabei handelt es sich um ein rein hydraulisches System.

### Offenbarung der Erfindung

Gegenstand der Erfindung ist ein Verfahren zum Bremsen eines Fahrzeuges, bei dem die Bremsdrucksteuereinrichtung Bremsdrucksignale von je einem Bremsbetätigungserfassungsmittel für das Vorderrad und das Hinterrad empfängt. Die Betätigung der Bremse wird von dem Fahrer bewirkt. Nicht selten kommt es dabei zu einer ungünstigen Verteilung der Bremskräfte auf das Vorder- bzw. Hinterrad. Verfahrensgemäß wird mittels der Bremsdrucksteuereinrichtung eine verbesserte Verteilung der Gesamtbremskraft auf das Vorder- bzw. Hinterrad bewirkt. Diese verbesserte Verteilung weicht von der von dem Fahrer bewirkten Verteilung ab. Im Idealfall können sehr erfahrene Fahrer auch selbst die Bremskräfte optimal auf Vorder- und Hinterrad verteilen, um einen möglichst kurzen, aber angenehmen Bremsweg zu realisieren. Ist diese Erfahrung nicht vorhanden, so kann dies durch die Erfindung behoben werden.

Insbesondere ermittelt die Auswertungseinrichtung, ob ein Bremswunsch vorliegt, wenn eine Bremsdruckerhöhung erfasst wird. Dabei stuft sie die Situation als eine Gefahrensituation ein, wenn ein Bremsdruck besonders stark einsteigt oder im Verlauf eines Bremsvorgangs erneut ansteigt. Die Bremsdrucksteuereinrichtung kann auch eine Gefahrensituation anders reagieren als auf eine normale Bremssituation. Insbesondere kann bei einer Gefahrensituation die Bremskraft über die von dem Fahrer bewirkte Kraft hinaus erhöht werden, vorzugsweise bis zur maximalen Ausnutzung der Leistungsfähigkeit der Vorderrad- bzw. Hinterradbremse. Soweit verfügbar, kann zugleich eine ABS-Funktion wirksam werden.

Insbesondere vergleicht die Steuereinrichtung die von dem Fahrer erzeugten Bremsdrücke und ermittelt mittels einer Funktion oder aus einer Tabelle die einzustellende Verteilung der Bremskraft auf Vorderrad und Hinterrad. Entsprechend des Ergebnisses dieser Ermittlung wird die elektrohydraulische Bremskraftbeeinflussungseinrichtung angesteuert, welche den ermittelten Druck an der Vorderrad- bzw. Hinterradbremse einstellt. Dazu kann der Druck über ein jeweiliges Ventil abgesenkt oder/und über einen jeweiligen elektrohydraulisch angesteuerten Druckerzeuger der Druck erhöht werden.

Ein Vorteil der Erfindung ist, dass der Verschleiß von Bremsen und Reifen optimiert wird. Eine geeignete Verteilung auf Vorder- bzw. Hinterradbremse verteilt die Bremskräfte besser, sodass insgesamt ein geringerer Verschleiß resultiert. Insbesondere wird außerdem Reifenverschleiß durch Blockieren verhindert. Nicht selten kann, soweit ein ABS-System zusätzlich vorhanden ist, das für ein einzelnes Rad eingreifen würde, mit dem vorgeschlagenen Verfahren der ABS-Eingriff in vielen kritischen Situationen vermieden werden. Noch ein weiterer Vorteil ist, dass der Bremsweg durch die verbesserte Verteilung der Bremskräfte auf Vorder- bzw. Hinterrad verringert wird. Dadurch können Gefahrensituationen entschärft werden.

Die Unteransprüche zeigen bevorzugte Weiterbildungen der Erfindung.

In einer Ausführungsform des Verfahrens wird die Verteilung der Gesamtbremskraft auf Grundlage gespeicherter Informationen vorgenommen. Diese können in der Bremsdrucksteuereinrichtung gespeichert sein. Diese Informationen sind vorzugsweise Werte einer Tabelle oder Parameter einer Funktion zur Ermittlung der Verteilung der Bremskräfte.

In einer weiteren Ausführungsform des Verfahrens werden bei der Verteilung der Gesamtbremskraft über die Informationen der Bremsbetätigungserfassungsmittel hinaus Informationen von weiteren Sensoren berücksichtigt, um zu einer verbesserten Verteilung der Bremskräfte zu kommen. Beispielsweise kann die Bremskraft in Abhängigkeit einer Bremsbeschleunigung oder einem Gefälle verstärkt auf das Vorderrad verteilt werden, oder bei einer Bergfahrt mehr Bremskraft auf ein Hinterrad verteilt werden. Eine Gefahrensituation kann anhand von Informationen von Sensoren erkannt werden, beispielsweise besonders hohe Bremsbeschleunigungen, starke Drehraten oder starke Geschwindigkeitsabnahme. Anhand der Beschleunigung kann auch festgestellt werden, ob der Fahrer einen Bremswunsch hat, beispielsweise wenn er mittels der Bremse oder anderer Methoden wie etwa Motorbremse oder fahrtechnischen Bremsmanövern das Fahrzeug verlangsamt. Bei der Verteilung der Bremskräfte kann berücksichtigt werden, in welcher Fahrsituation sich ein Fahrzeug befindet, beispielsweise, ob es sich in einer Kurvenfahrt befindet. Dazu kann die Fahrdynamik des Fahrzeuges berücksichtigt werden, etwa indem der Fahrzustand aus Informationen von Sensoren wie etwa einem Drehratensensor und/oder einem Geschwindigkeitssensor und/oder einem Beschleunigungssensor ermittelt wird. Grundsätzlich können mehrere Signale verschiedener Sensoren redundant verwendet werden, sowohl zur Ermittlung der Bremskraftverteilung als auch für die Ermittlung eines Fahrzustands des Fahrzeugs.

Die Verteilung einer Gesamtbremskraft auf das Vorder- bzw. Hinterrad kann umfassen, dass sich auch die Gesamtbremskraft verändert. Beispielsweise kann in einer Gefahrensituation die Gesamtbremskraft erheblich erhöht werden.

In einer weiteren Ausführungsform des Verfahrens wird vorgeschlagen, den Bremsvorgang in mehrere Stufen zu unterteilen, die jeweils die Art und Weise der Beeinflussung des Bremsdrucks mittels der Bremskraftbeeinflussungseinrichtung betreffen. In einer ersten Stufe wird in den Bremsvorgang nicht eingegriffen, das heißt, dass er in der Art ausgeführt wird, wie sie der Fahrer durch sein Bremsverhalten vorgibt. In einer zweiten Stufe wird der vom Fahrer erzeugte Bremsdruck mittels der Bremskraftbeeinflussungseinrichtung geringfügig verändert. In der dritten Stufe findet eine mittlere Beeinflussung und in der vierten Stufe eine starke Beeinflussung des Bremsdrucks mittels der Bremskraftbeeinflussungseinrichtung statt. In einer fünften Stufe wird der Bremsdruck unabhängig davon konstant gehalten, welchen Bremsdruck der Fahrer bewirken möchte, was die stärkste Beeinflussung darstellt. Die genannten Stufen müssen in dem Verfahren nicht alle ausgeführt werden, und auch ihre Reihenfolge kann beliebig sein. Auf diese Weise kann das Verfahren an die jeweilige Situation angepasst werden. Dabei spielt insbesondere eine Rolle, ob eine Gefahrensituation oder eine normale Bremssituation vorliegt. Der Übergang von einer normalen Bremssituation zu einer Gefahrensituation kann quantifiziert werden und den Stufen zugeordnet werden, sodass, je gefährlicher eine eintretende Situation eingeschätzt wird, eine umso stärkere Beeinflussung des Bremsdrucks stattfindet. Beispielsweise kann der Gefahrengrad von der Stärke des Bremsdrucks abhängig gemacht werden, den der Fahrer durch die Bremsbetätigung erzeugt. Alternativ oder zusätzlich können Informationen von weiteren Sensoren zur Einschätzung des Gefahrengrades herangezogen werden. Denkbar ist zum Beispiel, mittels eines Radbewegungssensors zu erfassen, ob und wie stark ein Bremsvorgang eingeleitet wurde. Alternativ oder zusätzlich kann die Betätigung eines Bremshebels erfasst werden.

Ein Drucksensor kann in einer Bremsbetätigungseinrichtung angeordnet sein. Weiter kann die Auswahl der Stufe an der Geschwindigkeit des Fahrzeuges orientiert werden, beispielsweise kann bei einem stehenden Fahrzeug die erste Stufe gewählt werden. Bewegt sich das Fahrzeug, so kann anhand der Fahrzeuggeschwindigkeit und/oder -beschleunigung und/oder der Änderung des vom Fahrer erzeugten Bremsdrucks oder einer Änderung der Stellung einer Bremsbestätigungseinrichtung eine Einstufung der Gefährdung vorgenommen werden. Zusätzlich kann bei Vorliegen einer höheren Gefährdung eine ABS-Funktion der Fahrzeugbremse aktiviert werden, soweit eine solche verfügbar ist. Durch die verbesserte Verteilung der Bremskräfte auf Vorder- bzw. Hinterrad kann jedoch das Ansprechen eines ABS-Systems im Vergleich zu der Erzeugung von Bremsdruck durch den Fahrer in vielen Fällen hinausgezögert werden. Zumindest in der fünften Stufe kann optional eine ABS-Funktion oder eine ABS-ähnliche Funktion bewirkt werden. Der Bremsweg wird dabei durch eine ideale Ausnutzung der Hinter- und Vorderradbremse in Kombination optimiert. Durch schnell wechselnde Bremsdruckbeeinflussung der Bremskraftbeeinflussungseinrichtung wird bei aktiver ABS-ähnlicher Funktion bewirkt, dass die Bremsen ebenfalls schnell wechselnd stärker und schwächer bremsen, wodurch ein dauerhaftes Blockieren der Räder und Kontrollverlust über das Fahrzeug verhindert werden.

In einer weiteren Ausführungsform des Verfahrens wird die Verteilung der Gesamtbremskraft auf die Vorderrad- und die Hinterradbremse derart vorgenommen, dass keine der Bremsen blockiert. Dies kann beispielsweise erreicht werden, indem das Gewicht des Fahrers durch Daten aus einem elektrischen Antrieb über die Beschleunigung bei einer elektrischen Leistung ermittelt wird. Daraus kann eine geeignete Gesamtbremskraft ermittelt werden, bei der bei vorteilhafter Verteilung der Bremskräfte auf das Vorder- bzw. Hinterrad erreicht werden kann, dass keines der Räder blockiert. Außerdem kann durch eine klassische ABS-Funktion erreicht werden, dass nur temporäres Blockieren stattfindet.

In einer weiteren Ausführungsform wird eine Bremskraft im Verlauf eines Bremsvorgangs nachkorrigiert. Dabei wird insbesondere ein Bremsdruck erhöht, um den Bremsweg zu verringern. Indem diese Maßnahmen während des Verlaufs des Bremsvorgangs ergriffen werden, statt einmalig die Bremskraftverteilung festzulegen, kann der Bremsvorgang flexibel an Ereignisse wie veränderten Untergrund, sich verändernde Verkehrssituationen oder sich verändernder Straßenverlauf, insbesondere nach oben oder nach unten, angepasst werden.

In einer weiteren Ausführungsform wird auf eine Verringerung des Bremsdrucks am Vorderrad dadurch reagiert, dass an dem Hinterrad der Bremsdruck erhöht wird, um bevorzugt wenigstens näherungsweise den Bremskraftverlust am Vorderrad auszugleichen.

In einer weiteren Ausführungsform wird, wenn nur eine von Vorderrad- und Hinterradbremse vom Fahrer betätigt wird, durch die Bremsdrucksteuereinrichtung auch die andere der beiden Bremsen betätigt. Auf diese Weise wird eine höhere Gesamtbremskraft erreicht, was zu einem geringeren Bremsweg führt und den Verschleiß von Bremsen und Reifen verringert.

In einer weiteren Ausführungsform wird eine Bremse eines Rades so angesteuert, dass so stark gebremst wird, dass eine maximal mögliche Reibung zwischen dem Rad und dem Untergrund angenähert wird. Dazu wird der Bremsdruck soweit erhöht, dass das Rad blockiert, woraufhin der Bremsdruck wieder zurückgenommen wird, sodass das Rad zu einer gebremsten Drehung freigegeben wird. Die Steuereinrichtung wechselt zwischen diesen beiden Zuständen schnell, wobei schnell bedeutet, dass der Wechsel während eines typischen Bremsvorganges mehrere Male vollzogen wird. Der Bremsdruck, bei dem das Blockieren stattfindet, ist dabei der Bremsdrucksteuereinrichtung bekannt. Die Information kann beispielsweise durch eine Kalibrierung gewonnen werden, bei der der Bremsdruck erhöht wird, bis das Spiel aus den Bremsenteilen gedrückt ist und die Bremswirkung merklich zunimmt. Es ist weiter denkbar, den Blockierbremsdruck aus diesem kalibrierten Bremsdruck beispielsweise durch Modifikation mit einem Fahrergewicht abzuleiten. Das Verfahren gemäß dieser Ausführungsform kann einem Bremsvorgang überlagert werden, um den Bremsweg möglichst stark zu verkürzen. Dies wird vorzugsweise bei einem schnellen Druckanstieg durch zügige Betätigung der Bremsbetätigungseinrichtung durch den Fahrer oder/und bei Erkennung einer Gefahrensituation durchgeführt. Dies kann eines oder beide der Räder betreffen. Wenn keine Gefahrensituation erkannt wird, somit ein normaler Bremsvorgang vorliegt, wird das Verfahren nach dieser Ausführungsform vorzugsweise nicht durchgeführt. Der Eingriff in das Bremssystem beschränkt sich somit auf eine verbesserte Verteilung der Bremskräfte auf Vorder- und Hinterrad.

In einer weiteren Ausführungsform des Verfahrens wird die Wirkung der Bremskraftbeeinflussungseinrichtung bei einem Stromausfall verhindert. Dies bedeutet, dass bei Stromausfall die von dem Fahrer erzeugten Bremskräfte in der Verteilung zu Vorder- bzw. Hinterrad geleitet werden, in der sie von dem Fahrer erzeugt werden. Dies kann beispielsweise erreicht werden, indem in jeder Bremskraftbeeinflussungseinrichtung ein Abtrennventil vorgesehen ist, mit der sich die Bremskraftbeeinflussungseinrichtungen aus dem Bremssystem hydraulisch herausnehmen lassen. Die Abtrennventile sind selbstschließend ausgeführt, sodass sie die Verbindung der Bremskraftbeeinflussungseinrichtung zu dem Bremssystem unterbrechen, wenn ein Stromausfall vorliegt.

In einem weiteren Aspekt der Erfindung wird eine Bremseinrichtung vorgeschlagen, die je ein Bremsbetätigungserfassungsmittel für die Betätigung der Vorderradbremsbetätigungseinrichtung bzw. der Hinterradbremsbetätigungseinrichtung aufweist. Die Bremsdrucksteuereinrichtung ist dazu eingerichtet, Bremsbetätigungsinformationen von den Bremsbetätigungserfassungsmitteln aufzunehmen, welche mit den Bremsbetätigungseinrichtungen wirkverbunden sind. Die Bremsbetätigungsinformationen können insbesondere Informationen über den Bremsdruck sein, wobei sie insbesondere in digitalen Daten oder analogen Signalen von Bremsdrucksensoren kodiert sein können. Die Bremsdrucksteuereinrichtung ist weiter dazu eingerichtet, eine Gesamtbremskraft auf die Vorderrad- bzw. die Hinterradbremse zu verteilen, wobei die Bremsbetätigungsinformationen die Gesamtbremskraft und die Verteilung der Bremskraft auf das Vorderrad bzw. Hinterrad vorgeben. Weiter ist die Bremsdrucksteuereinrichtung dazu eingerichtet, die Bremskraftbeeinflussungseinrichtung gemäß dem für Vorderrad- bzw. Hinterradbremse ermittelten Ausmaß der Betätigung anzusteuern. Die Bremsdrucksteuereinrichtung ist weiter dazu eingerichtet, eine Verteilung der Bremskräfte vorzunehmen, die von einer Verteilung abweicht, die der Fahrer mit den Bremsbetätigungseinrichtungen vorgibt.

Es ergeben sich die Vorteile, die oben schon in Bezug auf das Verfahren zum Bremsen eines Fahrzeuges beschrieben wurden.

In einer Ausführungsform der Bremseinrichtung werden der Bremsdrucksteuereinrichtung Informationen von Sensoren zugeleitet. Insbesondere sind dies ein Geschwindigkeitssensor, ein Beschleunigungssensor, ein Drehratensensor zur Erfassung von Winkelgeschwindigkeiten oder Winkelbeschleunigungen des Fahrzeuges, ein Neigungssensor und/oder ein Sensor für eine Stellung einer Bremsbetätigungseinrichtung. Der Geschwindigkeitssensor kann als ein Sensor ausgebildet sein, der die rotative Stellung oder eine Geschwindigkeit eines Rades des Fahrzeuges erfassen kann. Die Informationen von einem oder mehreren Sensoren werden von der Bremsdrucksteuereinrichtung zur Ermittlung der Verteilung einer Gesamtbremskraft auf das Vorder- bzw. Hinterrad verwendet.

In einer weiteren Ausführungsform der Bremseinrichtung weist die Bremsdruckbeeinflussungseinrichtung ein oder mehrere Abtrennventile auf. Mit diesen Abtrennventilen kann die Bremsdruckbeeinflussungseinrichtung von den Bremsen und der Bremsbetätigungseinrichtung getrennt werden. Falls die elektrische Stromversorgung für die Bremsdruckbeeinflussungseinrichtung ausfällt, kann mit den Abtrennventilen verhindert werden, dass die Bremsdruckbeeinflussungseinrichtung den Bremsdruck verändert, der mit den Bremsbetätigungseinrichtungen vorgegeben wird. Die Bremse funktioniert dann herkömmlich ohne Unterstützung durch die Bremsdruckbeeinflussungseinrichtung. Die Abtrennventile sind dazu selbstsperrend ausgeführt, das heißt, dass eine hydraulische Trennung bewirkt wird, wenn keine elektrische Energie zur Verfügung steht.

In einer weiteren Ausführungsform der Bremseinrichtung weist diese eine Druckerzeugungseinrichtung auf, die Bremsflüssigkeit abgeben oder aufnehmen kann. Diese ist mit dem mit Bremsflüssigkeit gefüllten Teil der Bremseinrichtung verbunden, sodass eine Volumenänderung der Druckerzeugungseinrichtung wie eine Betätigung der Bremsbetätigungseinrichtung wirkt. Bei einer Volumenvergrößerung der Druckerzeugungseinrichtung wird somit Bremsdruck aus dem System genommen, während bei einer Verringerung des Volumens der Bremsdruck erhöht wird. In der Bremsdruckbeeinflussungseinrichtung ist je eine Druckerzeugungseinrichtung für ein Vorderrad und ein Hinterrad vorhanden, sodass deren Bremskraft unabhängig voneinander beeinflussbar ist.

In einer weiteren Ausführungsform der Bremseinrichtung ist die Bremseinrichtung eine Kombination aus einem bekannten ABS-System und einer Bremseinrichtung gemäß einer der vorangehend beschriebenen Ausführungsformen.

Alle vorbeschriebenen Ausführungsformen einer Bremseinrichtung können dazu eingerichtet sein, eine Ausführungsform des zuvor beschriebenen Verfahrens auszuführen.

### Zeichnung

Nachfolgend werden Ausführungsbeispiele der Erfindung unter Bezugnahme auf die begleitenden Zeichnungen im Detail beschrieben. In den Zeichnungen ist:
- Figur 1: einen schematischen Schaltplan der Bremseinrichtung in einer ersten Ausführungsform,
- Figur 2: einen schematischen Schaltplan einer zweiten Ausführungsform der Bremseinrichtung,
- Figur 3: einen schematischen Schaltplan einer dritten Ausführungsform der Bremseinrichtung,
- Figur 4: ein schematisches Diagramm zur Erläuterung der Reibungsverhältnisse zwischen Rad und Straße,
- Figur 5: ein schematisches Diagramm zur Erläuterung der Beeinflussung von Bremskräften an einem Vorderrad und einem Hinterrad,
- Figur 6: ein schematisches Ablaufdiagramm eines Verfahrens zum Bremsen eines Fahrzeuges, und
- Figur 7: ein schematisches Diagramm von Bremsphasen während eines Bremsvorgangs.

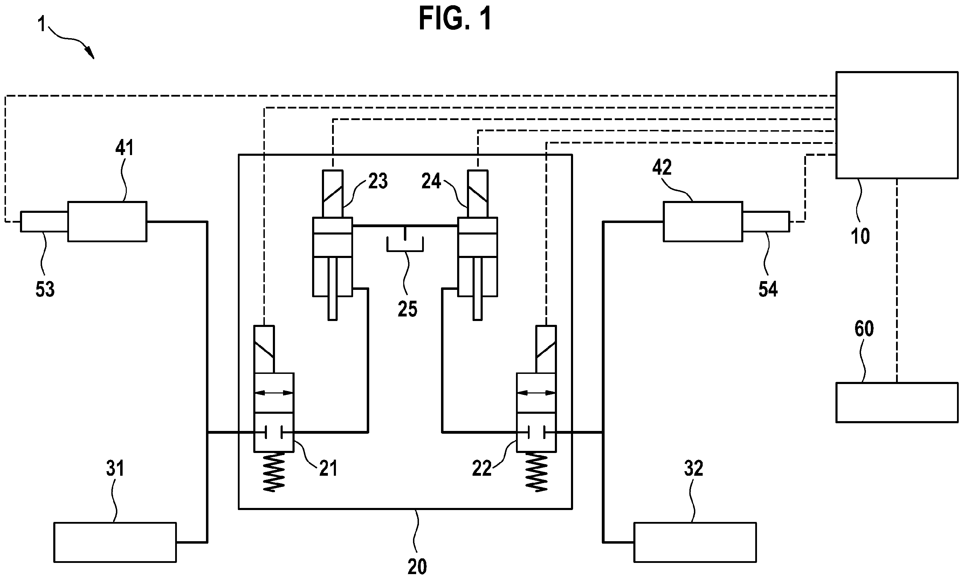

Bevorzugte Ausführungsformen der Erfindung Figur 1 zeigt eine schematische Darstellung einer Bremseinrichtung 1 als hydraulisch-elektrischen Schaltplan. Die Bremseinrichtung 1 umfasst eine Vorderradbremse 31 und eine Hinterradbremse 32, die jeweils mittels einer Bremsbetätigungseinrichtung 41 bzw. 42 von einem Fahrer betätigbar sind. Die Bremsbetätigungseinrichtungen 41, 42 sind jeweils als hydraulischer Druckerzeuger mit einem Zylinder und einem Kolben ausgeführt. Die Bremsbetätigungseinrichtungen 41, 42 umfassen jeweils eine Bremsbetätigungsmesseinrichtung 53, 54 als Bremsbetätigungserfassungsmittel, die in der Ausführungsform der Figur 1 jeweils ein Signal erzeugen, das der relativen Stellung des jeweiligen Kolbens in dem jeweiligen Zylinder oder einer jeweiligen Stellung eines Betätigungshebels oder eines Betätigungspedals entspricht. Die Signale der Bremsbetätigungsmesseinrichtung 53 bzw. 54 werden zu einer Bremsdrucksteuereinrichtung 10 geleitet, welche das Ausmaß der Betätigung der Vorderradbremse 31 und der Hinterradbremse 32 erfasst. Die Bremsdrucksteuereinrichtung 10 ist außerdem mit einem oder mehreren weiteren Sensoren 60 verbunden, die in der Figur 1 als gemeinsamer Block dargestellt sind. Mittels dieser Sensoren 60 können weitere relevante Betriebsparameter des Fahrzeuges, in das die Bremseinrichtung 1 eingebaut ist, erfasst werden. Dies betrifft insbesondere Parameter, die den aktuellen Fahrzustand betreffen, wie Geschwindigkeit, Beschleunigung, Neigung, Drehrate und/oder Radstellung.

Die Bremseinrichtung 1 umfasst weiter einer Bremskraftbeeinflussungseinrichtung 20, welche jeweils für die Vorderradbremse und die Hinterradbremse ein Abtrennventil 21 bzw. 22 und eine Druckerzeugungseinrichtung 23 bzw. 24 umfasst. Die Abtrennventile 21 bzw. 22 sind mit dem Bremskreislauf für die Vorderradbremse 31 bzw. die Hinterradbremse 32 hydraulisch verbunden und können den jeweils zu der Vorderradbremse 31 bzw. Hinterradbremse 32 gehörigen Teil der Bremskraftbeeinflussungseinrichtung 20 von dem jeweiligen Bremskreis trennen. Die Abtrennventile 21 bzw. 22 sind elektromagnetisch steuerbar und dazu jeweils mit der Bremsdrucksteuereinrichtung 10 verbunden. Bei den Absperrventilen 21 bzw. 22 handelt es sich um selbstsperrende Ventile, das heißt, dass bei einem Ausfall der elektrischen Energieversorgung die Abtrennventile 21 bzw. 22 in eine Abtrennstellung übergehen. Dies hat zur Folge, dass die Bremskraftbeeinflussungseinrichtung 20 hydraulisch von den Bremskreisen getrennt wird, wenn ein solcher Ausfall vorliegt. Die hydraulischen Bremskreise der Vorderradbremse 31 bzw. der Hinterradbremse 32 sind dann herkömmlich manuell mittels der Bremsbetätigungseinrichtungen 41 bzw. 42 bedienbar. Wenn die Absperrventile 21 bzw. 22 auf Durchlass geschaltet sind, sind die Bremskreise der Vorderradbremse 31 bzw. der Hinterradbremse 32 jeweils mit ihrer Druckerzeugungseinrichtung 23 bzw. 24 verbunden. Bei diesen Druckerzeugungseinrichtungen 23, 24 kann es sich wie dargestellt um sich um elektromagnetisch, etwa durch einen Elektromotor oder eine elektromagnetische Spule betätigbare Kolben-Zylinder-Systeme handeln, deren Zylinder jeweils mit dem zugehörigen Absperrventil 21 bzw. 22 verbunden sind, wobei mittels stärkerer oder schwächerer Kraft auf den Kolben in Richtung der Bremsflüssigkeit in dem Zylinder der Druck in einem Bremskreis erhöht oder verringert werden kann. Alternativ können auch Piezo-Aktoren, thermische oder elektrochemische Aktoren eingesetzt werden, die eine Volumenveränderung bzw. Druckerhöhung in den Druckerzeugungseinrichtungen bewirken können. Entsprechend stellen sich größere bzw. kleinere Bremskräfte an den Bremsen 31, 32 ein. Sollte ein Bremsflüssigkeitsdefizit oder ein Überschuss an Bremsflüssigkeit in den Druckerzeugungseinrichtungen 23, 24 vorliegen, so kann Bremsflüssigkeit in einem Tank 25 gespeichert werden. In der Bremsdrucksteuereinrichtung 10 läuft ein Prozess ab, mit dem die vom Fahrer gewünschte Bremskraft mittels der Druckerzeugungseinrichtungen 23 bzw. 24 auf die Vorderradbremse 31 bzw. die Hinterradbremse 32 verteilt werden kann. Die Bremsdrucksteuereinrichtung 10 muss nicht zwingend eine eigene oder einzelne Einheit sein, sondern kann verteilt aufgebaut sein und/oder Teil einer anderen Steuereinrichtung, beispielsweise einer Motorsteuerung sein.

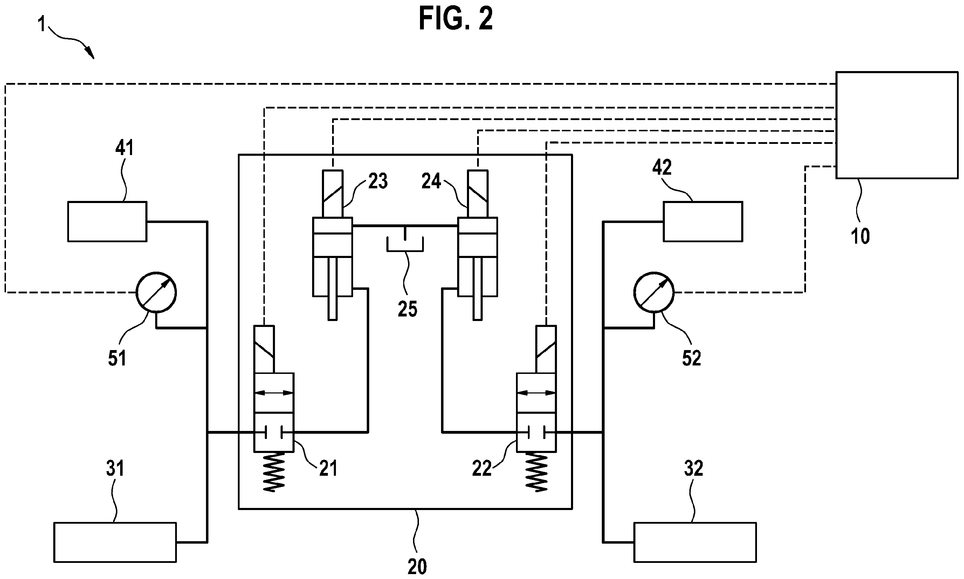

Figur 2 zeigt eine schematische Darstellung einer zweiten Ausführungsform der Bremseinrichtung 1 als hydraulisch-elektrischen Schaltplan. Die zweite Ausführungsform stimmt in weiten Teilen mit der ersten Ausführungsform überein, sodass im Folgenden nur Unterschiede zu der ersten Ausführungsform beschrieben werden. Bezüglich der gleichen Merkmale sei auf die Beschreibung der Figur 1 verwiesen. Die zweite Ausführungsform unterscheidet sich von der ersten Ausführungsform darin, dass in jedem der Bremskreise statt einer Bremsbetätigungsmesseinrichtung 53, 54 für die Vorderradbremse 31 bzw. die Hinterradbremse 32 jeweils eine Bremsdruckmesseinrichtung 51 bzw. 52 angeordnet ist. Die Bremsdruckmesseinrichtungen 51, 52 können unmittelbar an der Bremsbetätigungseinrichtung 41, 42, etwa einem Bremsgriff oder einem Bremsdruckgeberzylinder, angeordnet sein. Die Bremsdruckmesseinrichtungen 51, 52 senden Signale bzgl. der vom Fahrer erzeugten Bremsdrücke an die Bremsdrucksteuereinrichtung 10. Diese interpretiert den Bremswunsch daher nicht, wie in der Ausführungsform der Figur 1, anhand des Ausmaßes der Betätigung einer Betätigungseinrichtung, sondern anhand des Drucks, der von den Betätigungseinrichtungen 41 bzw. 42 aufgebaut worden ist.

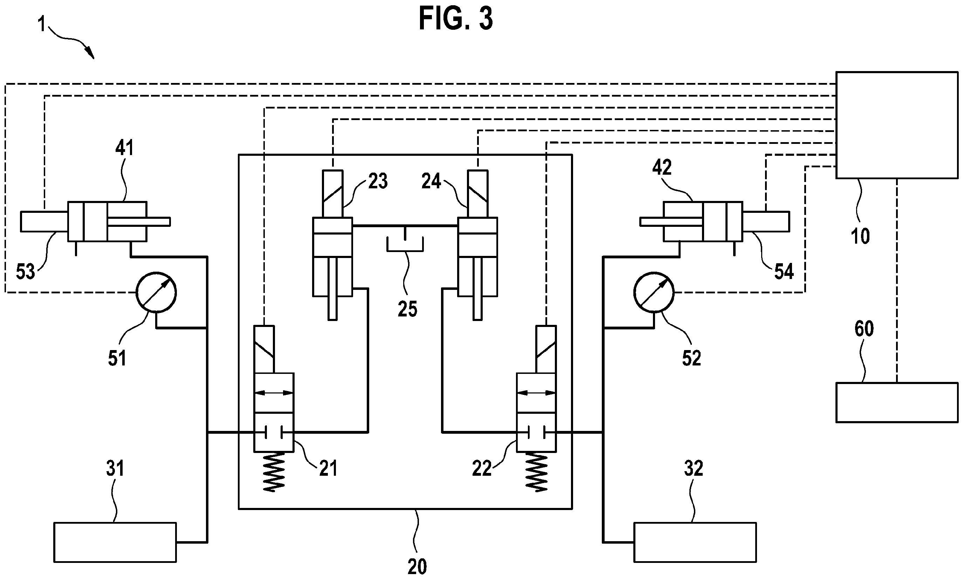

Figur 3 zeigt eine schematische Darstellung einer dritten Ausführungsform der Bremseinrichtung 1 in einem hydraulisch-elektrischen Schaltplan. Die dritte Ausführungsform stimmt in weiten Teilen mit der ersten Ausführungsform überein, sodass im Folgenden nur Unterschiede zu der ersten Ausführungsform beschrieben werden. Bezüglich der gleichen Merkmale sei auf die Beschreibung von Figur 1 verwiesen. Im Unterschied zu der Figur 1 weist die dritte Ausführungsform zusätzlich die Druckmesseinrichtungen 51 und 52 auf, die schon in Bezug auf die Figur 2 beschrieben worden sind. Die Bremsdrucksteuereinrichtung 10 in der dritten Ausführungsform kann somit den Bremswunsch des Fahrers sowohl aus dem Ausmaß der Betätigung einer Betätigungseinrichtung 41 bzw. 42, als auch aus dem mittels der Bremsbetätigungseinrichtungen 41 bzw. 42 aufgebauten Drücken oder aus beidem ableiten.

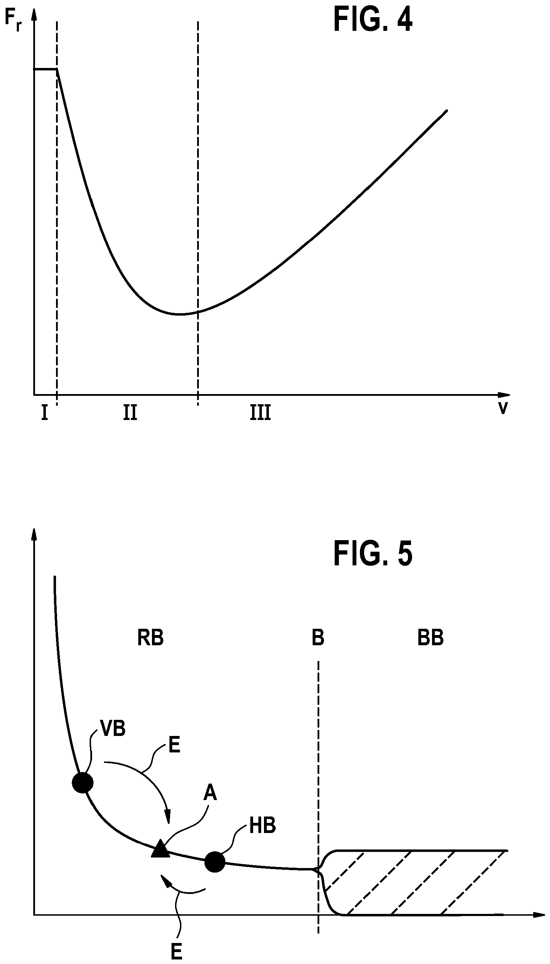

Figur 4 zeigt ein Diagramm, das beispielhaft eine Stribeck-Kurve darstellt, in dem eine Reibkraft F_{R} auf der Ordinate über eine Reibgeschwindigkeit v dargestellt ist. In einem ersten Geschwindigkeitsbereich I liegt Haftreibung vor, bei welcher ein hoher Reibkoeffizient vorliegt. Dies entspricht in typischen Fällen auch der Rollreibung zwischen einem Rad und einer Fahrbahn. In einem Reibgeschwindigkeitsbereich II findet Gleiten statt, wobei der Reibkoeffizient mit der Reibgeschwindigkeit erheblich absinkt. In einem dritten Bereich III mit noch höherer Reibgeschwindigkeit nimmt der Reibkoeffizient mit der Reibgeschwindigkeit wieder zu. Daraus lässt sich ableiten, dass die höchsten Verzögerungen erreicht werden können, wenn die Rollreibung aufrecht erhalten wird, statt den Bremsvorgang in eine Gleitreibung zu überführen.

Figur 5 zeigt schematisch ein Diagramm, in dem auf der Ordinate der Bremsweg eines Fahrzeuges und auf der Abszisse die Stärke der Betätigung einer Bremsbetätigungseinrichtung dargestellt ist. Es ergibt sich eine Kurve, die durch eine Blockiergrenze B in einen Rollreibungsbereich RB und einen Blockierbereich BB unterteilt ist, wobei der Rollreibungsbereich RB sich zwischen der Blockiergrenze B und der Ordinate befindet. In Figur 5 ist beispielhaft ein Bremsvorgang im Rollreibungsbereich RB dargestellt, bei dem der Bremszustand der Vorderradbremse als ein Punkt VB und der Bremszustand der Hinterradbremse als ein Punkt HB auf der Kurve dargestellt sind. Die Lage der Punkte VB und HB wird durch die Stärke der Betätigung der Bremsbetätigungseinrichtungen durch den Fahrer des Fahrzeuges bestimmt. Durch einen Eingriff E der Bremseinrichtung kann die Lage der Punkte VB und HB auf der Kurve beeinflusst werden. In der in Figur 5 gezeigten Ausführungsform findet der Eingriff statt, indem die Bremskraft an der schwächer gebremsten Bremse, in dem Fall der Vorderradbremse, erhöht wird, und die Bremskraft an der stärker gebremsten Bremse, in diesem Fall die Hinterradbremse, verringert wird. Dies findet derart statt, dass die Gesamtbremskraft beider Bremsen im Wesentlichen erhalten bleibt. Es ergibt sich ein dreieckig dargestellter Punkt A auf der Kurve, der einen angepassten Bremszustand für beide Bremsen darstellt. Durch die Verringerung der Bremskraft der stärker gebremsten Bremse, hier der Hinterradbremse, wird deren Blockierneigung vermindert und somit auch deren Verschleiß. Bei einer Vollbremsung liegt der dreieckige Punkt A optimalerweise im Rollreibungsbereich RB und in Richtung der Ordinate unmittelbar neben der Blockiergrenze B, was die maximal mögliche Verzögerung darstellt. Im Blockierbereich BB, der sich auf der von der Ordinate abgewandten Seite der Blockiergrenze B befindet, ist die Kurve verbreitert dargestellt, da nicht eindeutig zu sagen ist, wie sich der Bremsweg im Falle des Blockierens von Rädern verhält. Dies ist unter anderem geschwindigkeitsabhängig.

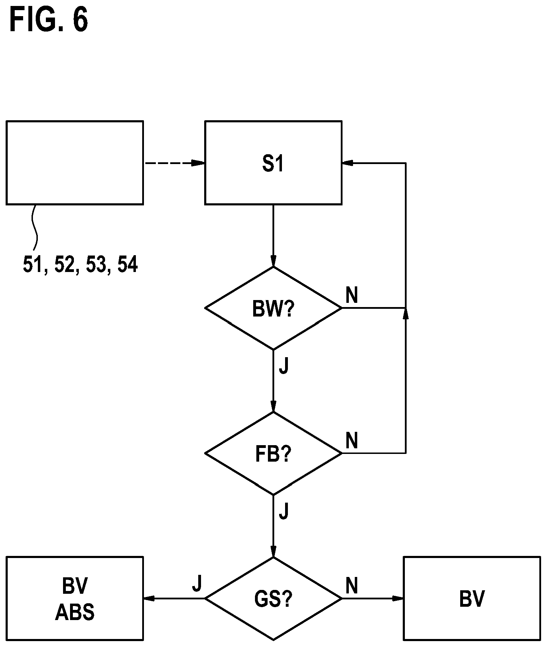

In Figur 6 ist ein schematisches Ablaufdiagramm abgebildet, welches beispielhaft einen Betrieb der Bremseinrichtung bzw. einen Ablauf eines Verfahrens zum Bremsen eines Fahrzeuges darstellt. Vom Fahrer kommt über die Bremsbetätigungsmesseinrichtung die Information, dass gebremst werden soll. Dazu betätigt der Fahrer die Bremsbetätigungseinrichtung. Dies hat eine Druckerhöhung im hydraulischen Kreislauf der Vorderrad- und/oder der Hinterradbremse zur Folge. Die Bremsbetätigungserfassungsmittel umfassen Drucksensoren und/oder Sensoren für die mechanische Bewegung der Bremsbetätigungseinrichtung, die entsprechende elektrische Signale erzeugen und diese an die Bremsdrucksteuereinrichtung weitergeben. In der Bremsdrucksteuereinrichtung werden diese aufbereitet, verarbeitet, analysiert und auf der Basis der erhaltenen Signale die Bremsdruckbeeinflussungseinrichtung angesteuert. Außerdem können weitere Einheiten des Fahrzeugs wie etwa ein Motor, eine Mensch-Maschine-Schnittstelle oder andere Steuergeräte informiert werden und/oder von diesen Instanzen Informationen bezogen werden. Die Bremsdrucksteuereinrichtung wertet die Signale bzw. Informationen in einem Schritt S1 dahingehend aus, dass sie feststellt, ob der Fahrer einen Bremswunsch BW hat. Wenn kein Bremswunsch BW vorliegt, so wird keine Ansteuerung der Druckerzeugungseinrichtungen vorgenommen und das Verfahren mit dem Schritt S1 fortgesetzt, das heißt, dass weitere Signale bzw. Informationen ausgewertet werden.

Ist ein Bremswunsch BW, das heißt z.B. eine Betätigung der Bremsbetätigungseinrichtung, festgestellt worden, so wird anhand von weiteren Sensoren, etwa einem Geschwindigkeitssensor, einem Beschleunigungssensor, einem Drehratensensor, einem Neigungssensor oder einem Radbewegungssensor festgestellt, ob eine Fahrzeugbewegung FB vorliegt oder nicht. Wenn keine Fahrzeugbewegung FB vorliegt, ist ein Eingreifen in den Bremsvorgang nicht erforderlich, und der Prozess wird mit dem Schritt S1 fortgesetzt und neue Signale von der Bremsbetätigungsmesseinrichtung werden ausgewertet. Falls eine Fahrzeugbewegung vorliegt, so geht der Prozess dazu über, festzustellen, ob eine Gefahrensituation GS vorliegt oder nicht. In der dargestellten Ausführungsform wird, wenn keine Gefahrensituation GS vorliegt, ein Bremsvorgang BV ausgeführt, bei dem die von dem Fahrer erzeugten Bremskräfte nicht verändert werden oder derart verändert werden, dass an Vorderrad und Hinterrad jeweils eine geeignete Bremskraft vorliegt. Diese kann in manchen Fällen dieselbe Bremskraft für das Vorder- und das Hinterrad sein.

Ob eine Gefahrensituation GS vorliegt, kann beispielsweise unter Nutzung der in Bezug auf die Fahrsituation oben genannten Sensoren ermittelt werden. Bewegt sich das Fahrzeug, so wird anhand der Geschwindigkeit, der Beschleunigung, einem starken Anstieg des Bremsdrucks oder/und des Ausmaßes der Betätigung der Bremsbetätigungseinrichtung entschieden, ob eine Gefahrensituation GS vorliegt oder nicht. Beispielsweise kann, wenn keine Fahrgeschwindigkeit vorliegt und die Bremse betätigt wird, die Bremsdrucksteuereinrichtung darauf schließen, dass keine Gefahrensituation vorliegt, selbst wenn die Bremse in einem Ausmaß betätigt wird, das bei einer Fahrt zum Blockieren der Räder führen würde. Beispielsweise kann der Fahrer an einer Ampel stehen und die Bremse betätigen. Grundsätzlich kann, wenn keine Fahrgeschwindigkeit vorliegt, auf einen Eingriff in das Bremsverhalten mittels der Bremskraftbeeinflussungseinrichtung verzichtet werden.

Wenn eine Gefahrensituation GS erkannt worden ist, so wird von der Bremsdrucksteuereinrichtung ein Bremsvorgang BV mit angepassten Bremskräften an Vorderrad und Hinterrad sowie mit überlagerter ABS-ähnlicher Funktion durchgeführt. Ebenso werden, wenn keine Gefahrensituation GS vorliegt, die Bremskräfte an dem Vorderrad und dem Hinterrad geeignet verändert, insbesondere, um den Bremsweg bei dem Bremsvorgang BV zu verkürzen.

Bei einer zugleich mit der Erfindung realisierten herkömmlichen ABS-Funktion kann statt einer ABS-ähnlichen Funktion das herkömmliche ABS aktiviert werden, wenn eine Gefahrensituation GS erkannt wurde. Der Eingriff der ABS-Funktion kann durch eine verbesserte Verteilung der Bremskräfte auf das Vorder- bzw. Hinterrad verzögert werden. Wird im Verlauf eines Bremsvorgangs zunächst keine Gefahrensituation GS festgestellt, jedoch später eine Gefahrensituation GS festgestellt, so kann nach der Feststellung der Gefahrensituation GS die Bremsung mit der ABS-ähnlichen Funktion oder, wenn vorhanden, der herkömmlichen ABS-Funktion ausgeführt werden. Der Bremsweg wird dabei durch eine ideale Ausnutzung der Bremsmöglichkeit durch die Hinter- und Vorderradbremse in Kombination optimiert.

Anhand der nachfolgend aufgeführten Tabelle wird eine Übersicht über die Gefahren bei verschiedenen Kombinationen der Betätigungsstärke einer Vorderradbremse und einer Hinterradbremse angegeben.

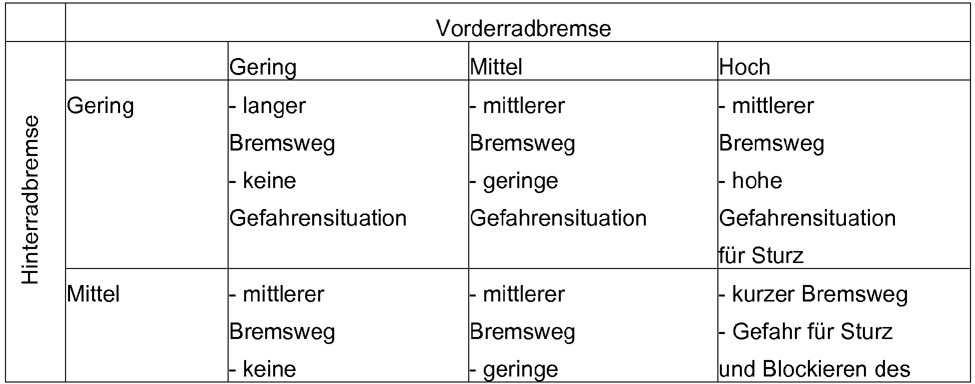

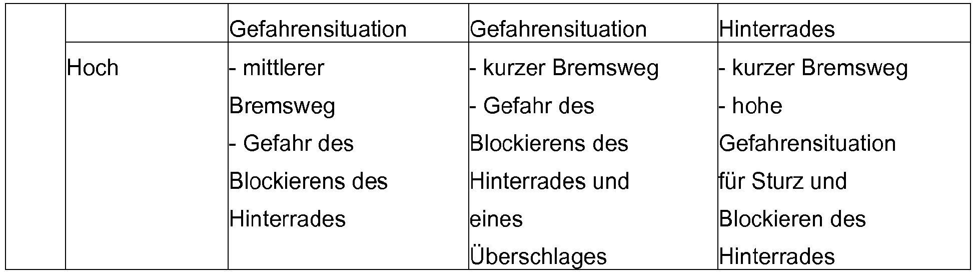

Bei Vorliegen einer Kombination aus einer geringen oder mittleren Bremskraft an der Vorderradbremse und der Hinterradbremse liegt eine nur geringe Gefahr vor. Bei hoher Bremswirkung am Hinterrad und geringer oder mittlerer Bremswirkung am Vorderrad liegt eine verbesserungsfähige Bremssituation vor.

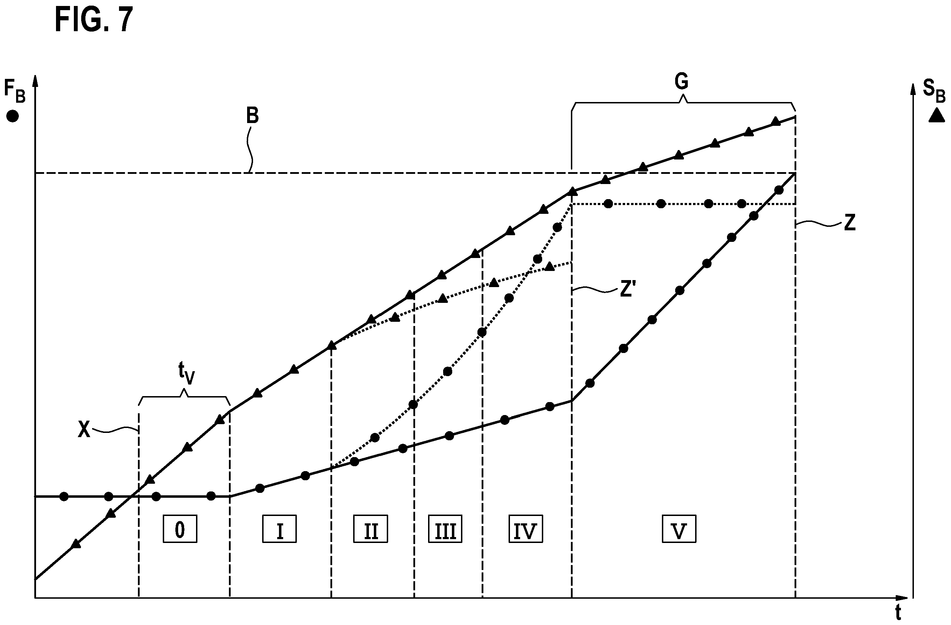

Figur 7 zeigt schematisch ein Diagramm, in dem Bremsvorgänge als Graphen eingetragen sind. In dem Diagramm ist auf der Ordinate eine Gesamtbremskraft F_{B} abgetragen, während auf der Abszisse die Zeit t des Bremsvorgangs dargestellt ist. Am rechten Ende der Abszisse ist eine weitere Ordinate dargestellt, auf der Bremsweg s_{B} abgetragen ist. Die Kurven in dem Diagramm, die zu der Ordinate der Gesamtbremskraft F_{B} gehören, sind mit kleinen Kreisen markiert, während Kurven, die zu der Ordinate des Bremsweges s_{B} gehören, mit kleinen Dreiecken markiert sind. Die Punkte bzw. Dreiecke dienen ausschließlich der Markierung der Kurven. Parallel zur Abszisse ist eine Blockiergrenze B als gestrichelte Linie eingetragen. In Richtung der Abszisse ist der dargestellte Bremsvorgang in sechs Abschnitte unterteilt, die jeweils mit römischen Ziffern in rechteckigen Kästchen bezeichnet sind. Zu einem Zeitpunkt X, der durch eine gestrichelte Linie parallel zur Ordinate dargestellt ist, tritt ein Ereignis ein, das zum Auslösen des Bremsvorgangs führt. Während der Phase 0 findet die Reaktion des Fahrers auf das Ereignis statt, das die Verzögerungszeit t_{V} dauert. Beginnend mit der Phase I üben die Bremsen des Fahrzeuges eine Gesamtbremskraft F_{B} aus. Die durchgezogenen Linien für die Gesamtbremskraft F_{B} und den Bremsweg s_{B} stellen jeweils den Verlauf des Bremsvorgangs ohne Eingriff der Bremskraftbeeinflussungseinrichtung dar und entsprechen somit einem herkömmlichen Bremsen eines Fahrers. Im dargestellten Fall steigt die Gesamtbremskraft F_{B} im Verlauf der Phasen I bis IV kontinuierlich an. Da das Fahrzeug nicht sofort zum Stehen kommt, bewegt es sich entlang des Bremsweges, was mit der durchgezogenen, mit Dreiecken markierten Linie schematisch dargestellt ist. Zu Beginn der Phase V erhöht der Fahrer den Anstieg der Gesamtbremskraft F_{B}, die infolgedessen erheblich stärker als in den Phasen I bis IV ansteigt. Daraus kann abgeleitet werden, dass während der Phase V eine Gefahrensituation G vorliegt, z.B. eine drohende Kollision. Entsprechend bewegt sich das Fahrzeug verstärkt verzögert entlang des Bremswegs s_{B}, was durch den flacheren Verlauf der durchgezogenen, mit Dreiecken markierten Linie schematisch dargestellt ist. Diese Bremswegkurve endet an einer gestrichelten Linie Z, die parallel zu den Ordinaten in das Diagramm eingetragen ist. An dieser Stelle steht das Fahrzeug und der herkömmliche Bremsvorgang ist abgeschlossen.

Mit den beiden punktierten Linien ist dargestellt, wie sich die Gesamtbremskraft F_{B} und der Bremsweg s_{B} unter Einfluss der Bremskraftbeeinflussungseinrichtung verändern. Während der Phase I findet ein Bremsvorgang ohne Eingriff der Bremsbeeinflussungseinrichtung statt. Während dieser Phase ermittelt die Bremsdrucksteuereinrichtung, welche Bremswirkung der Fahrer für das Vorderrad und das Hinterrad jeweils bewirkt hat. In der Phase II beginnt die Bremsdrucksteuereinrichtung, den Bremsdruck in Vorderrad und/oder Hinterrad zu beeinflussen und zu optimieren. Zunächst wird in der Phase II eine schwache Beeinflussung bewirkt. Die Gesamtbremskraft F_{B} steigt dadurch etwas an, wie durch den Verlauf der gepunkteten, mit Kreisen markierten Bremskraftlinie gezeigt ist. Dementsprechend weicht auch der Verlauf des Bremsweges s_{B} als gepunktete, mit Dreiecken markierte Linie von der durchgezogenen, mit Dreiecken markierten Linie des Bremswegsverlaufs ohne Beeinflussung ab. Durch die stärkere Gesamtbremskraft F_{B} wird der Bremsweg s_{B} verkürzt. In der Phase III wird die Einflussnahme erhöht und die Bremskraft steigt stärker an. Dementsprechend verläuft auch die punktierte Linie des Bremswegs flacher. Während der Phase IV wird von der Bremskraftbeeinflussungseinrichtung ein noch stärkerer Anstieg der Gesamtbremskraft F_{B} bewirkt, was eine noch stärkere Abflachung des Verlaufes der Kurve für den Bremsweg S_{B} bewirkt. Der flachere Verlauf bedeutet auch eine stärkere Geschwindigkeitsabnahme, was dazu führt, dass das Fahrzeug schon zum Zeitpunkt Z', nämlich am Übergang zwischen den Phasen IV und V zum Stehen kommt. Der Zeitpunkt Z' liegt dabei vor dem Zeitpunkt Z, zu dem das Fahrzeug ohne den Eingriff der Bremskraftbeeinflussungseinrichtung zum Stehen kommt. In einigen Fällen lässt sich durch den derart verkürzten Bremsweg eine Gefahrensituation entschärfen, beispielsweise ein Aufprall vermeiden. Durch das Anhalten des Fahrzeuges schon zum Zeitpunk Z' kann das Auftreten einer Gefahrensituation G in der Phase V vermieden werden.

## Patentansprüche

1. Verfahren zum Bremsen eines motorisch oder mit Muskelkraft betreibbaren Fahrzeugs, insbesondere eines Elektrofahrrades, mit einer hydraulischen Vorderradbremse (31) und einer hydraulischen Hinterradbremse (32),
- wobei ein von einem Fahrer des Fahrzeugs mittels einer Vorderradbremsbetätigungseinrichtung (41) bewirkter Bremsdruck der Vorderradbremse (31) und/oder ein mittels einer Hinterradbremsbetätigungseinrichtung (42) bewirkter Bremsdruck der Hinterradbremse (32) mittels einer elektrohydraulischen Bremskraftbeeinflussungseinrichtung (20) verändert wird,
- indem bei einem Bremsvorgang die Bremskraftbeeinflussungseinrichtung (20) von einer elektrischen Bremsdrucksteuereinrichtung (10) angesteuert wird und der Bremsdruck für die Vorderradbremse (31) und/oder die Hinterradbremse (32) erhöht und/oder verringert und somit deren Bremskraft erhöht und/oder verringert wird, und
- die Bremsdrucksteuereinrichtung (10) Bremsdrucksignale von je einem Bremsbetätigungserfassungsmittel für die Vorderradbremse (31) und die Hinterradbremse (32) empfängt und eine verbesserte Verteilung einer Gesamtbremskraft (F_{B}) auf das Vorderrad und das Hinterrad bewirkt wird, die von der vom Fahrer bewirkten Verteilung abweicht.
**dadurch gekennzeichnet, dass**
- ein Rad des Fahrzeugs mittels der Bremsdrucksteuereinrichtung (10) zum Blockieren gebracht wird und anschließend wieder zur gebremsten Drehung freigegeben wird, wobei die Bremsdrucksteuereinrichtung (10) mehrfach zwischen Blockieren und Freigeben wechselt.

2. Verfahren nach Anspruch 1, **dadurch gekennzeichnet, dass** die Verteilung der Gesamtbremskraft (F_{B}) gemäß gespeicherter Informationen vorgenommen wird, wobei diese Informationen bevorzugt in der Bremsdrucksteuereinrichtung (10) gespeichert sind.

3. Verfahren nach einem der vorangehenden Ansprüche, **dadurch gekennzeichnet, dass** bei der Verteilung der Gesamtbremskraft (F_{B}) Informationen von Sensoren (60) berücksichtigt werden, insbesondere von einem Geschwindigkeitssensor, einem Beschleunigungssensor, einem Drehratensensor, einem Neigungssensor oder/und einem Sensor für eine Stellung einer Bremsbetätigungseinrichtung.

4. Verfahren nach einem der vorangehenden Ansprüche, **dadurch gekennzeichnet, dass** ein Bremsvorgang in Abhängigkeit des Bremsdrucks an einem Vorderrad, insbesondere eines Zweirades, in mehrere verschiedene Beeinflussungsstufen unterteilt wird, in denen keine Beeinflussung des Bremsdrucks, verschieden starke Beeinflussung des Bremsdrucks mittels der Bremskraftbeeinflussungseinrichtung stattfindet, oder der Bremsdruck unabhängig von einer Bewirkung eines höheren Bremsdrucks durch den Fahrer wenigstens im Mittel konstant gehalten wird, wobei in insbesondere eine jeweilige Auswahl der vorgenannten Stufen in einer Verfahrensvariante realisiert ist.

5. Verfahren nach einem der vorangehenden Ansprüche, **dadurch gekennzeichnet, dass** mittels der Bremskraftbeeinflussungseinrichtung (20) eine Bremskraft im Verlauf eines Bremsvorgangs nachkorrigiert wird, indem ein Bremsdruck erhöht wird, um den Bremsweg zu verringern.

6. Verfahren nach einem der vorangehenden Ansprüche, **dadurch gekennzeichnet, dass** bei einer Verringerung des hydraulischen Bremsdrucks einer von der Vorderradbremse (31) und der Hinterradbremse (32) der hydraulische Bremsdruck der anderen von der der Vorderradbremse (31) und der Hinterradbremse (32) erhöht wird, sodass insbesondere die Gesamtbremskraft (F_{B}) wenigstens näherungsweise so groß wie vor dem Verringern des Bremsdrucks ist.

7. Verfahren nach einem der vorangehenden Ansprüche, **dadurch gekennzeichnet, dass** im Falle der Betätigung nur einer der Vorderradbremse (31) und der Hinterradbremse (32) von der Bremsdrucksteuereinrichtung (10) auch die andere von der Vorderradbremse (31) und der Hinterradbremse (32) betätigt wird.

8. Verfahren nach einem der vorangehenden Ansprüche, **dadurch gekennzeichnet, dass** die Wirkung der Bremskraftbeeinflussungseinrichtung (20) auf den Bremsdruck bei Stromausfall verhindert wird.

9. Elektrohydraulische Bremseinrichtung für ein motorisch oder mit Muskelkraft betreibbares Fahrzeug, insbesondere Elektrofahrrad, umfassend
- eine hydraulische Vorderradbremse (31) und eine hydraulische Hinterradbremse (32),
- je eine separate Bremsbetätigungseinrichtung (41, 42) für die Vorderradbremse (31) und die Hinterradbremse (32) zur Betätigung durch den Fahrer,
- eine elektrohydraulische Bremskraftbeeinflussungseinrichtung (20) zur Erhöhung und/oder Verringerung eines Bremsdrucks der Vorderradbremse (31) und/oder eines Bremsdrucks der Hinterradbremse (32) und somit zur Erhöhung und/oder Verringerung von deren Bremskraft, und
- eine elektrische Bremsdrucksteuereinrichtung (10), mittels der die Bremskraftbeeinflussungseinrichtung (20) ansteuerbar ist,
- je ein Bremsbetätigungserfassungsmittel (51, 52, 53, 54) für die Erfassung der Betätigung der Vorderradbremse (31) bzw. der Hinterradbremse (32),
- wobei die Bremsdrucksteuereinrichtung (10) zum Aufnehmen von Bremsdruckinformationen von den Bremsbetätigungseinrichtungen (41, 42) und zur Verteilung einer Gesamtbremskraft (F_{B}) auf die Vorderradbremse (31) und/oder die Hinterradbremse (32) anhand von Signalen oder/und Informationen von den Bremsbetätigungserfassungsmitteln (51, 52, 53, 54) und zum Ansteuern der Bremskraftbeeinflussungseinrichtung (20) eingerichtet ist, wobei diese Verteilung der Gesamtbremskraft (F_{B}) von einer Verteilung abweicht, die der Fahrer mit den Bremsbetätigungseinrichtungen (41, 42) bewirkt.
**dadurch gekennzeichnet, dass**
- die Bremsdruckbeeinflussungseinrichtung (20) für das Vorderrad und das Hinterrad je eine Druckerzeugungseinrichtung (23, 24) aufweist, welche mit einem Bremsfluid der Vorderradbremse (31) oder der Hinterradbremse (32) in Verbindung steht und mittels welcher sich der jeweilige Bremsdruck beeinflussen lässt.

10. Bremseinrichtung nach Anspruch 9, bei der der Bremsdrucksteuereinrichtung (10) Informationen von einem Geschwindigkeitssensor, einem Beschleunigungssensor, einem Drehratensensor, einem Neigungssensor oder/und einem Sensor (53, 54) für eine Stellung einer Bremsbetätigungseinrichtung (41, 42) zur Ermittlung der Verteilung einer Gesamtbremsbremskraft (F_{B}) auf die Vorderradbremse (31) und die Hinterradbremse (32) zuleitbar sind.

11. Bremseinrichtung nach einem der Ansprüche 9 oder 10, **dadurch gekennzeichnet, dass** die Bremsdruckbeeinflussungseinrichtung (20) ein elektrisch betätigtes Abtrennventil (21, 22) aufweist, mit dem die Bremsdruckbeeinflussungseinrichtung (20) hydraulisch von der Vorderradbremse (31) und der Hinterradbremse (32) und den Bremsbetätigungseinrichtungen (41, 42) trennbar ist.

12. Bremseinrichtung nach einem der Ansprüche 9 bis 11, **dadurch gekennzeichnet, dass** die Bremsdrucksteuereinrichtung (10) eine separate Baugruppe oder Teil einer Baugruppe des Fahrzeugs ist, insbesondere Teil einer zentralen Steuerelektronik oder einer Mensch-Maschine-Schnittstellenelektronik.

13. Bremseinrichtung nach einem der Ansprüche 9 bis 12, **dadurch gekennzeichnet, dass** die Bremseinrichtung zur Ausführung eines Verfahrens nach einem der Ansprüche 1 bis 9 eingerichtet ist.

## Claims

1. Method for braking a vehicle, in particular an electric bicycle, which can be operated by motor or with muscle power, having a hydraulic front wheel brake (31) and a hydraulic rear wheel brake (32),
- wherein a brake pressure of the front wheel brake (31), which is brought about by a driver within the vehicle by means of a front wheel brake-activation device (41), and/or a brake pressure of the rear wheel brake (32), which is brought about by means of a rear wheel brake-activation device (42), is changed by means of an electrohydraulic braking force-influencing device (20),
- in that during a braking process the braking force-influencing device (20) is actuated by an electric brake pressure-control device (10), and the brake pressure for the front wheel brake (31) and/or the rear wheel brake (32) is increased and/or reduced, and therefore the braking force thereof is increased and/or reduced, and
- the brake pressure-control device (10) receives brake pressure signals from a brake activation-detection means for the front wheel brake (31) and one for the rear wheel brake (32), and improved distribution of an overall braking force (F_{B}) to the front wheel and to the rear wheel is brought about, said distribution differing from the distribution brought about by the driver, **characterized in that**
- one wheel of the vehicle is made to lock by means of the brake pressure-control device (10) and is subsequently released again in order to experience braked rotation, wherein the brake pressure-control device (10) changes repeatedly between locking and release.

2. Method according to Claim 1, **characterized in that** the distribution of the overall braking force (F_{B}) is performed according to stored information, wherein this information is preferably stored in the brake pressure-control device (10).

3. Method according to one of the preceding claims, **characterized in that** during the distribution of the overall braking force (F_{B}), information from sensors (60), in particular from a speed sensor, an acceleration sensor, a rotational rate sensor, and inclination sensor and/or a sensor for a position of a brake activation device, is taken into account.

4. Method according to one of the preceding claims, **characterized in that** a braking process is divided into multiple different degrees of influence as a function of the brake pressure at a front wheel, in particular of a two-wheeled vehicle, in which degrees of influence the brake pressure is not influenced, the brake pressure is influenced to different degrees by means of the braking force-influencing device, or the brake pressure is kept constant, at least on average independently of a relatively high braking pressure being brought about by the driver, wherein in particular a respective selection of the abovementioned stages is implemented in one method variant.

5. Method according to one of the preceding claims, **characterized in that** a braking force is corrected within the course of a braking process by means of the braking force-influencing device (20) **in that** a brake pressure is increased in order to reduce the braking distance.

6. Method according to one of the preceding claims, **characterized in that** when the hydraulic brake pressure of one of the front wheel brake (31) and the rear wheel brake (32) is reduced, the hydraulic brake pressure of the other of the the front wheel brake (31) and the rear wheel brake (32) is increased, with the result that in particular the overall braking force (F_{B}) is at least approximately as large as before the reduction of the brake pressure.

7. Method according to one of the preceding claims, **characterized in that** in the case of the activation of just one of the front wheel brake (31) and the rear wheel brake (32), the other of the front wheel brake (31) and the rear wheel brake (32) is also activated by the brake pressure control device (10).

8. Method according to one of the preceding claims, **characterized in that** the effect of the braking force-influencing device (20) on the brake pressure is prevented in the case of a power failure.

9. Electrohydraulic brake device for a vehicle which can be operated by motor or by muscle power, in particular an electric bicycle, comprising
- a hydraulic front wheel brake (31) and a hydraulic rear wheel brake (32),
- in each case a separate brake activation device (41, 42) for the front wheel brake (31) and the rear wheel brake (32) for activation by the driver,
- an electrohydraulic braking force-influencing device (20) for increasing and/or reducing a brake pressure of the front wheel brake (31) and/or a brake pressure of the rear wheel brake (32) and therefore for increasing and/or reducing the braking force thereof, and
- an electric brake pressure-control device (10) by means of which the braking force-influencing device (20) can be actuated,
- in each case a brake activation-detection means (51, 52, 53, 54) for detecting the activation of the front wheel brake (31) or of the rear wheel brake (32),
- wherein the brake pressure-control device (10) is configured to receive brake pressure information from the brake activation devices (41, 42) and to distribute an overall braking force (F_{B}) to the front wheel brake (31) and/or the rear wheel brake (32) on the basis of signals and/or information from the brake activation-detection means (51, 52, 53, 54) and to actuate the braking force-influencing device (20), wherein this distribution of the overall braking force (F_{B}) differs from a distribution which the driver brings about with the brake activation device (41, 42),
**characterized in that**
- the brake pressure-influencing device (20) for the front wheel and the rear wheel has for each wheel a pressure generating device (23, 24) which is connected to a brake fluid of the front wheel brake (31) or of the rear wheel brake (32) and by means of which the respective brake pressure can be influenced.

10. Brake device according to Claim 9, in which information from a speed sensor, an acceleration sensor, a rotational rate sensor, an inclination sensor and/or a sensor (53, 54) for a position of a brake activation device (41, 42) for determining the distribution of an overall braking force (F_{B}) acting on the front wheel brake (31) and the rear wheel brake (32) can be fed to the brake pressure control device (10) .

11. Brake device according to one of Claims 9 or 10, **characterized in that** the brake pressure-influencing device (20) has an electrically activated isolation valve (21, 22) with which the brake pressure - influencing device (20) can be disconnected hydraulically from the front wheel brake (31) and the rear wheel brake (32) and the brake activation devices (41, 42).

12. Brake device according to one of Claims 9 to 11, **characterized in that** the brake pressure control device (10) is a separate assembly or part of an assembly of the vehicle, in particular part of an electronics central control system or a man-machine interface electronics system.

13. Brake device according to one of Claims 9 to 12, **characterized in that** the brake device is configured to carry out a method as claimed in one of Claims 1 to 9.

## Revendications

1. Procédé pour freiner un véhicule entraîné par moteur ou par la force musculaire, en particulier une bicyclette électrique présentant un frein hydraulique (31) de roue avant et un frein hydraulique (32) de roue arrière,
- une force de freinage appliquée sur le frein hydraulique (31) de roue avant par le conducteur du véhicule au moyen d'un dispositif (41) d'actionnement du frein de la roue avant et/ou une force de freinage appliquée sur le frein hydraulique (32) de roue arrière au moyen d'un dispositif (42) d'actionnement du frein de la roue arrière étant modifiées au moyen d'un dispositif électro-hydraulique (20) d'action sur la force de freinage,
- le dispositif (20) d'action sur la force de freinage étant commandé par un dispositif électrique (10) de commande de la pression de freinage lors d'une opération de freinage et la pression de freinage du frein hydraulique (31) de roue avant et/ou du frein hydraulique (32) de roue arrière étant augmentée et/ou diminuée, leur force de freinage étant ainsi augmentée et/ou diminuée et
- le dispositif (10) de commande de la pression de freinage recevant des signaux de pression de freinage d'un moyen de détection de l'actionnement du frein hydraulique (31) de roue avant et du frein hydraulique (32) de roue arrière et une meilleure répartition de la force totale de freinage (F_{B}) entre la roue avant et la roue arrière, qui diffère de la répartition commandée par le conducteur, étant obtenue,
**caractérisé en ce que**
- une roue du véhicule est amenée à se bloquer au moyen du dispositif (10) de commande de la pression de freinage pour être ensuite libérée de nouveau pour tourner de manière freinée, le dispositif (10) de commande de la pression de freinage alternant plusieurs fois entre blocage et libération.

2. Procédé selon la revendication 1, **caractérisé en ce que** la répartition de la force globale de freinage (F_{B}) est réalisée sur la base d'informations conservées en mémoire, ces informations étant conservées de préférence dans le dispositif (10) de commande de la pression de freinage.

3. Procédé selon l'une des revendications précédentes, **caractérisé en ce que** lors de la force globale de freinage (F_{B}), des informations provenant de capteurs (60), en particulier d'un capteur de vitesse, d'un capteur d'accélération, d'un capteur de vitesse de rotation, d'un capteur d'inclinaison et/ou d'un capteur de position du dispositif d'actionnement des freins sont prises en compte.

4. Procédé selon l'une des revendications précédentes, **caractérisé en ce qu'**une opération de freinage est divisée en fonction de la pression de freinage appliquée sur la roue avant, notamment d'une bicyclette, en plusieurs étages d'action différents dans lesquels aucune action n'a lieu sur la pression de freinage, des actions d'intensité différentes sur la pression de freinage ont lieu au moyen du dispositif d'action sur la force de freinage ou la pression de freinage est maintenue constante au moins en moyenne même si le conducteur commande une pression de freinage plus élevée, une variante du procédé permettant de réaliser en particulier une sélection particulière des étapes ci-dessus.

5. Procédé selon l'une des revendications précédentes, **caractérisé en ce qu'**au cours d'une opération de freinage, la pression de freinage est corrigée au moyen du dispositif (20) d'action sur la force de freinage en augmentant la pression de freinage en vue de réduire la distance de freinage.

6. Procédé selon l'une des revendications précédentes, **caractérisé en ce que** lorsque la pression hydraulique de freinage du frein hydraulique (31) de roue avant ou du frein hydraulique (32) de roue arrière est diminuée, la pression hydraulique exercée sur le frein hydraulique (32) de roue arrière ou sur le frein hydraulique (31) de roue avant est augmentée de sorte qu'en particulier la force globale de freinage (F_{B}) soit au moins approximativement aussi élevée qu'avant la diminution de la pression de freinage.

7. Procédé selon l'une des revendications précédentes, **caractérisé en ce que** lorsque le dispositif (10) de commande de la pression de freinage actionne seulement le frein hydraulique (31) de roue avant ou le frein hydraulique (32) de roue arrière, le frein hydraulique (32) de roue arrière ou le frein hydraulique (31) de roue avant est également actionné.

8. Procédé selon l'une des revendications précédentes, **caractérisé en ce que** l'effet du dispositif (20) d'action sur la force de freinage sur la pression de freinage est bloqué en cas de panne de courant.

9. Dispositif électro-hydraulique de freinage pour un véhicule entraîné par moteur ou par la force musculaire, en particulier d'une bicyclette électrique, comprenant :
- un frein hydraulique (31) de roue avant et un frein hydraulique (32) de roue arrière,
des dispositifs (41, 42) d'actionnement des freins séparés pour le frein hydraulique (31) de roue avant et pour le frein hydraulique (32) de roue arrière, à actionner par le conducteur,
- un dispositif (20) d'action sur la force de freinage qui augmente et/ou diminue la pression de freinage du frein hydraulique (31) de roue avant et/ou la pression de freinage du frein hydraulique (32) de roue arrière et qui ainsi augmente et/ou diminue leur force de freinage et
- un dispositif (10) de commande de la pression de freinage au moyen duquel le dispositif (20) d'action sur la force de freinage peut être commandé,
- des moyens (51, 52, 53, 54) de détection de l'actionnement des freins qui détectent l'actionnement du frein hydraulique (31) de roue avant ou du frein hydraulique (32) de roue arrière,
- le dispositif (10) de commande de la pression de freinage étant conçu pour recevoir des informations de pression de freinage des dispositifs (41, 42) d'actionnement des freins et pour répartir une force globale de freinage (F_{B}) sur le frein hydraulique (31) de roue avant et/ou le frein hydraulique (32) de roue arrière à l'aide de signaux et/ou d'informations provenant des moyens (51, 52, 53, 54) de détection de l'actionnement des freins et pour commander le dispositif (20) d'action sur la force de freinage, cette répartition de la force globale de freinage (F_{B}) étant différente de la répartition commandée par le conducteur à l'aide des dispositifs (41, 42) d'actionnement des freins,
**caractérisé en ce que**
- les dispositifs (20) d'action sur la force de freinage pour la roue avant et pour la roue arrière présentent chacun un dispositif (23, 24) d'application d'une pression qui communique avec un fluide de freinage du frein hydraulique (31) de roue avant ou du frein hydraulique (32) de roue arrière et au moyen duquel il est possible d'agir sur chacune des pressions de freinage.

10. Dispositif de freinage selon la revendication 9, dans lequel les informations provenant d'un capteur de vitesse, d'un capteur d'accélération, d'un capteur de vitesse de rotation, d'un capteur d'inclinaison et/ou d'un capteur (53, 54) de la position de dispositifs (41, 42) d'actionnement des freins peuvent être apportées au dispositif (10) de commande de la pression de freinage pour répartir la force globale de freinage (F_{B}) entre le frein hydraulique (31) de roue avant et le frein hydraulique (32) de roue arrière.

11. Dispositif de freinage selon l'une des revendications 9 ou 10, **caractérisé en ce que** le dispositif (20) d'action sur la force de freinage présente une soupape de séparation (21, 22) actionnée électriquement et par laquelle le dispositif (20) d'action sur la force de freinage peut être séparé hydrauliquement du frein hydraulique (31) de roue avant et du frein hydraulique (32) de roue arrière ainsi que des dispositifs (41, 42) d'actionnement des freins.

12. Dispositif de freinage selon l'une des revendications 9 à 11, **caractérisé en ce que** le dispositif (10) de commande de la pression de freinage est un module séparé ou une partie d'un module du véhicule, et en particulier une partie d'une électronique centrale de commande ou d'une électronique à interface homme-machine.

13. Dispositif de freinage selon l'une des revendications 9 à 12, **caractérisé en ce que** le dispositif de freinage est conçu pour mettre en oeuvre un procédé selon l'une des revendications 1 à 9.
